# FASCICULE DE BREVET EUROPEEN

(11) **EP 0 592 309 B1**
(45) Date de publication et mention de la délivrance du brevet: **06.09.1995**
(21) Numéro de dépôt: 93402457.1
(22) Date de dépôt: 06.10.1993
(51) Int. Cl.: C23C 26/00, C23C 8/24, B23K 26/14

(54) **Procédé de nitruration d'une pièce en alliage de titane et dispositif de projection d'azote et de gaz neutre**
Verfahren zum Nitrieren eines Werkstückes aus einer Titanlegierung und Vorrichtung zum Sprühen von Stickstoff und Inertgas
Process for nitriding a titanium alloy workpiece and device for spraying nitrogen and inert gas

(30) Priorité: 09.10.1992 FR 9212020
(43) Date de publication de la demande: 13.04.1994
(73) Titulaire: GEC ALSTHOM ELECTROMECANIQUE SA, 75016 Paris (FR)
(72) Inventeur: Coulon, André, F-90160 Bessoncourt (FR)
(74) Mandataire: Vigand, Privat

(56) Documents cités:
- EP-A- 0 246 828
- EP-A- 0 491 075

## Description

La présente invention concerne un procédé de nitruration d'une pièce en alliage de titane.

La nitruration permet de durcir superficiellement les pièces métalliques.

Il existe plusieurs procédés de durcissement réalisés dans des milieux statiques c'est-à-dire sans mouvement notable. Il y a notamment la nitruration au gaz, au bain de sels, à la poudre et la nitruration ionique. Plus récemment une technique d'implantation ionique a été proposée.

Ces procédés permettent un durcissement d'une couche de 1 à 2 dixièmes de mm pour les alliages de titane.

Il existe également un procédé non statique dans lequel on dirige sur la pièce un faisceau laser mobile relativement par rapport à la pièce opérant une légère fusion superficielle de la zone touchée, on projette de l'azote sur la pièce dans une direction fixe par rapport à la direction du faisceau laser et on projette un gaz neutre sur la pièce. (EP-A-491075)

Dans ce procédé, l'azote est mélangé au gaz neutre et le jet d'azote-gaz neutre ainsi que le faisceau laser convergent sur la pièce si bien que le mélange gazeux frappe la zone liquide. Pour éviter que cette zone soit pulvérisée on doit limiter la pression du jet gazeux.

Grâce à ce procédé on a obtenu un durcissement sur une épaisseur de O,4 à 1 mm d'une pièce en alliage de titane.

Le procédé selon l'invention permettant d'obtenir un durcissement sur une beaucoup plus grande épaisseur (1 à 2 mm) est caractérisé en ce qu'on projette l'azote sous forte pression juste derrière la zone touchée par le faisceau laser de façon que l'azote pénètre dans la zone touchée alors qu'elle est devenue pâteuse, et en ce qu'on projette le gaz neutre autour de la projection d'azote de façon que la projection recouvre en débordant de la zone touchée par laser.

Le jet d'azote ne converge pas avec le faisceau laser dans la zone touchée mais il vient frapper cette zone alors qu'elle est devenue pâteuse et on obtiendra alors une proportion atomes N atomes Ti de 15 à 35 % ce qui est nécessaire pour avoir une bonne dureté (800 HV) sans aboutir à une pellicule cassante.

Le jet d'azote (non mélangé avec le gaz neutre) est sous forte pression (4 à 12 bars) de façon à pénétrer dans la zone pâteuse de profondeur 1 à 2 mm. Il ne détruit pas la zone touchée puisque celle-ci est pâteuse.

Le gaz neutre écarte l'oxygène de la zone traitée; de plus, le jet de gaz neutre sous faible pression (1 à 2 bars) entraîne le jet d'azote si bien que l'azote diffuse légèrement dans le gaz neutre ce qui diminue la formation superficielle de dendrites qui fragilisent la surface.

Le contact entre le jet d'azote rapide et le jet périphérique lent de gaz neutre met ce dernier en tourbillons ce qui améliore le balayage de l'oxygène.

De plus, on a trouvé que du fait de l'état pâteux de la zone frappée par le jet d'azote, il se forme des composés Ti₂N, Ti₃N₂, Ti₄N₃ dont la granulomètrie est fine, ce qui évite les fissures en fonctionnement.

La présente invention concerne également un dispositif de projection d'azote et de gaz neutre qui permette la diffusion du jet d'azote à sa périphérie dans la projection de gaz neutre et une mise en tourbillons du gaz neutre par le jet d'azote.

Le dispositif selon l'invention est caractérisé en ce qu'il comporte un tube central servant à véhiculer l'azote et un conduit symétrique de révolution autour de l'axe du tube central dont les parois interne et externe sont coniques la paroi interne venant s'appuyer sur le tube central et la paroi externe dépassant l'extrémité du tube et terminée par une partie divergente ledit conduit servant a véhiculer le gaz neutre.

L'invention va maintenant être décrite plus en détail en se référant à un mode de réalisation particulier cité à titre d'exemple non limitatif et représenté par des dessins annexés.

La figure 1 représente les moyens nécessaires à l'application du procédé selon l'invention.

La figure 2 représente une coupe de la figure 1.

La figure 3 représente un dispositif de projection d'azote et de gaz neutre.

La figure 4 représente une vue détaillée de la figure 3.

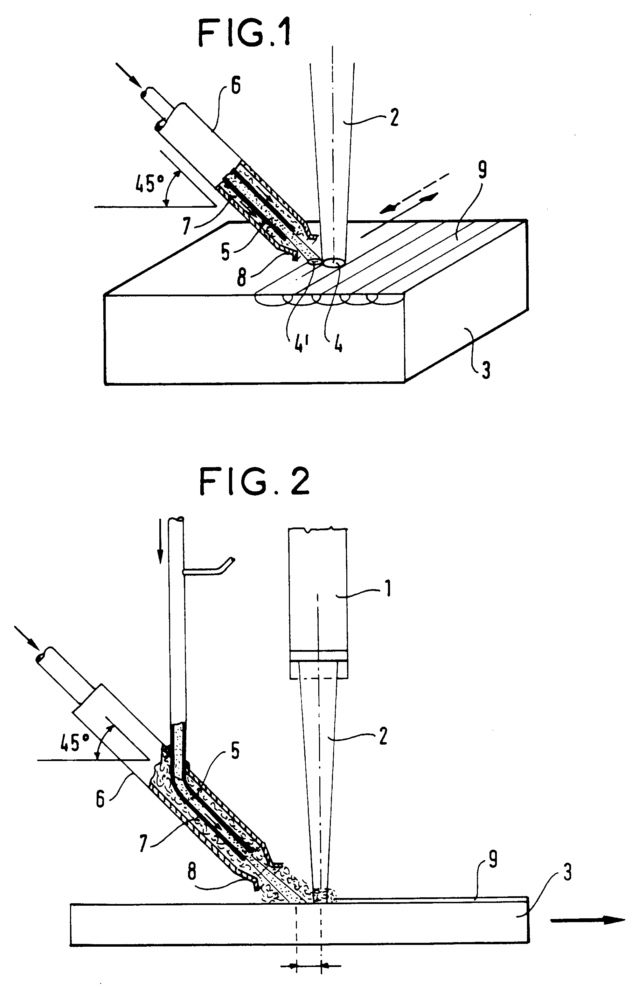

Dans le procédé selon l'invention on utilise un laser de puissance 1 (par exemple laser CO₂ ou YAG) dont le faisceau 2 frappe à la verticale une pièce 3 en alliage de titane située à courte distance du laser 1 (inférieure à 40 mm) (voir figures 1 et 2). La pièce 3 a une dureté de 300 HV environ. Le faisceau 2 est légèrement défocalisé et cette défocalisation ainsi que la puissance et la vitesse de déplacement de la pièce 3 (dans le sens de la flèche) sont réglées de façon qu'on obtienne une légère fusion superficielle du substrat dans une zone 4 en forme de pastille de diamètre 2 à 3 mm et de profondeur 1 à 2 mm.

On projette à l'aide d'un tube cylindrique 5 de petit diamètre (2 à 5 mm), type gicleur, de l'azote sous forte pression juste derrière la zone 4. Le tube 5 est incliné de 30° à 60° par rapport à la verticale et de préférence à 45°.

Autour du tube 5 est disposé une enveloppe 6 de même axe que le tube 5 et l'espace 7 situé entre tube 5 et enveloppe 6 est alimenté en gaz neutre, hélium ou de préférence argon, sous faible pression (1 à 2 bars).

L'enveloppe 6 se prolonge plus loin que l'extrémité 7 du tube 5 et est terminée par un convergent suivi d'un divergent 8.

L'argon est mis en tourbillons et recouvre en la débordant la zone 4.

L'argon est indispensable pour neutraliser l'oxygène de l'air ambiant lors de la fusion superficielle et son action doit donc précéder la fusion. Le contact entre le faisceau 2 et la pièce 3 se fait dans une atmosphère de gaz neutre. On a réglé les divers paramètres de façon que lorsque la zone 4 arrive sous le jet d'azote le métal ne soit plus à l'état liquide mais pâteux

En réglant la pression d'azote entre 4 et 12 bars c'est-à-dire avec une vitesse entre 20 et 70m/sec celui-ci pénètre à une profondeur de 1 à 2 mm dans cette zone devenue pâteuse et on obtient en surface une dureté de 800 HV.

La vitesse de l'argon est basse (1 à 2m/s) mais on choisit un débit suffisant pour que le spot de l'impact de l'argon sur la pièce 3 forme un cercle de 40 mm de diamètre.

On revêt ainsi la pièce 3 en faisant des séries de passes 9 adjacentes de largeur 2 à 3 mm.

Les vitesse d'avance de la pièce 3 peuvent aller de 40 à 60m/min pour une puissance de 3 kW. Le retard de la zone d'impact 4' d'azote par rapport à la zone d'impact 4 du faisceau 2 est inférieur à une demi-seconde. Les zones 4 et 4' sont de préférence tangentes.

La pièce traitée 3 a une surface dorée. En épaisseur, on observe un empilement d'une couche TiN en surface puis d'une couche Ti₂N puis un enrichissement de la phase α du substrat avec des phases complexes Ti₃N₂ et Ti₄N₃.

Le densité d'atome d'azote est de 15 à 35% par rapport aux atomes de Ti.

Le dureté superficielle est de 800 HV environ. A 2mm de profondeur on retrouve la dureté habituelle du substrat. Si l'alliage de titane est un TA6V, la dureté est d'environ 300/320 HV. De plus, une structure type Beta légèrement plus dure de cet alliage et qui a pour origine une transformation thermique pendant la refusion, pourra s'intercaler entre la partie nitrurée et la structure du TA6V type Alpha/Beta.

A noter qu'on trouve moins de TiN dendritique en surface qu'habituellement. Ceci provient notamment de a dilution d'azote dans l'argon.

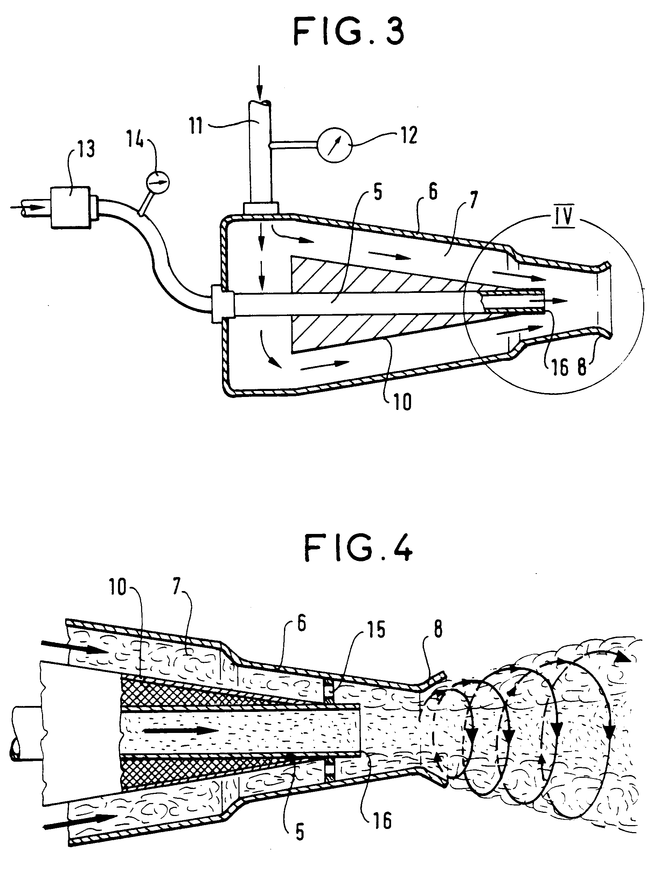

Le dispositif selon l'invention pour projeter l'azote et l'argon représenté aux figures 3 et 4 comporte un tube central 5 de faible diamètre, une enveloppe interne conique 10 venant s'appuyer au voisinage de l'extrémité du tube, une enveloppe externe 6 conique convergente de même axe que le tube 5 terminé par un divergent 8. L'argon entoure l'azote et l'empêche de s'expanser dans toutes les directions.

Une conduite d'argon alimente l'espace 7 entre enveloppe interne 10 et enveloppe externe 6.

Un débit-mètre 12 permet de vérifier le débit d'argon. Un compresseur 13 met l'azote sous pression et alimente le tube 5, le débit d'azote étant vérifié grâce également à un débit-mètre 14.

Des ailettes 15 sont disposées entre l'enveloppe externe 6 et le tube 5 au voisinage de son extrémité 16. Ces ailettes 15 servent à mettre le débit d'argon en rotation et ce débit est mis en tourbillon par le passage de l'azote à grande vitesse relativement par rapport à la vitesse de l'argon au voisinage du divergent 8. L'argon entoure l'azote et l'empêche de s'expanser dans toutes les directions.

Toutes les tuyauteries véhiculant les gaz sont en acier inoxydable.

## Revendications

1. Procédé de nitruration d'une pièce (3) en alliage de titane dans lequel on dirige sur la pièce (3) un faisceau laser (2) mobile relativement par rapport à la pièce (3) opérant une légère fusion superficielle de la zone (4) touchée par le laser (1), on projette de l'azote sur la pièce dans une direction fixe par rapport à la direction du faisceau laser, on projette un gaz neutre sur la pièce (3), caractérisé en ce qu'on projette l'azote sous forte pression juste derrière la zone (4) touchée par le faisceau laser (1) de façon que l'azote pénètre dans la zone (4) alors qu'elle est devenue pâteuse, et en ce qu'on projette le gaz neutre autour de la projection d'azote de façon que cette projection de gaz neutre recouvre en la débordant la zone (4) touchée par laser.

2. Procédé selon la revendication 1, caractérisé en ce que la pression de l'azote est comprise entre 4 et 12 bars et la pression de gaz neutre est comprise entre 1 et 2 bars.

3. Procédé selon la revendication 2, caractérisé en ce que le jet d'azote met le gaz neutre en tourbillons.

4. Dispositif de projection d'azote et de gaz neutre caractérisé en ce qu'il comporte un tube central (5) servant a véhiculer l'azote et un conduit (7) symétrique de révolution autour de l'axe du tube central (5) dont les parois interne et externe (10, 6) sont coniques la paroi interne (10) venant s'appuyer sur le tube central (5) et la paroi externe (6) dépassant l'extrémité (16) du tube (5) et terminée par une partie divergente (8), ledit conduit (7) servant a véhiculer le gaz neutre.

5. Dispositif selon la revendication 4, caractérisé en ce que le conduit de gaz neutre (7) comporte au voisinage de l'extrémité (16) du tube central (5) des ailettes (15) mettant le gaz neutre en rotation.

## Claims

1. A method of nitriding a piece (3) made of titanium alloy, in which a laser beam (2) that is movable relative to the piece (3) is directed onto the piece (3) causing a small amount of surface melting in the zone (4) impacted by the laser (1), nitrogen being blown onto the piece in a direction that is fixed relative to the direction of the laser beam, and an inert gas also being blown onto the piece (3), the method being characterized in that nitrogen is blown under high pressure immediately behind the zone (4) impacted by the laser beam (1) so that the nitrogen penetrates into the zone (4) once it has become semi-solid, and in that the immersed gas is blown around the stream of nitrogen so that said stream covers ad overlaps the zone (4) impacted by the laser.

2. A method according to claim 1, characterized in that the pressure of the nitrogen lies in the range 4 bars to 12 bare, and the pressure of the inert gas lies in the range 1 bar to 2 bars.

3. A method according to claim 2, characterized in that the jet of nitrogen sets up turbulence in the inert gas.

4. Apparatus for blowing nitrogen and inert gas, the apparatus being characterized in that it comprises a central tube (5) serving to convey the nitrogen, and a circularly symmetrical duct (7) about the axis of the central tube (5) having inside and outside walls (10, 6) that are conical, the inside wall (10) bearing against the central tube (5), and the outside walls projecting beyond the end (16) of the tube and being terminated by a diverging portion (8), said duct (7) serving to convey the inert gas.

5. Apparatus according to claim 4, characterized in that the inert gas duct (7) includes fins (15) in the vicinity of the end (16) of the central tube (5) and serving to impart rotation to the inert gas.

## Patentansprüche

1. Verfahren zum Nitrierhärten eines Bauteils (3) aus einer Titanlegierung, bei dem auf das Bauteil (3) ein bezüglich des Bauteils (3) beweglicher Laserstrahl (2) gerichtet wird, der ein leichtes oberflächliches Schmelzen der vom Laser (1) getroffenen Zone (4) hervorruft, wobei weiter Stickstoff sowie ein neutrales Gas in einer festen Richtung bezüglich der Richtung des Laserstrahls auf das Bauteil (3) gesprüht wird, dadurch gekennzeichnet, daß man den Stickstoff unter großem Druck knapp hinter der Zone (4) aufsprüht, die vom Laserstrahl (1) getroffen wird, so daß der Stickstoff in die Zone (4) eindringt, wenn diese bereits wieder pastenförmig geworden ist, und daß das neutrale Gas um den Stickstoffstrahl herum aufgesprüht wird, so daß es die vom Laser betroffene Zone (4) bedeckt und deren Umgebung trifft.

2. Verfahren nach Anspruch 1, dadurch gekennzeichnet, daß der Stickstoffdruck zwischen 4 und 12 Bar und der Druck des neutralen Gases zwischen 1 und 2 Bar gewählt wird.

3. Verfahren nach Anspruch 2, dadurch gekennzeichnet, daß der Stickstoffstrahl das neutrale Gas verwirbelt.

4. Vorrichtung zum Aufsprühen von Stickstoff und einem neutralen Gas, dadurch gekennzeichnet, daß sie ein zentrales Rohr (5) zur Lieferung des Stickstoffs und eine zum zentralen Rohr (5) koaxiale Leitung (7) zur Lieferung des neutralen Gases aufweist, die dieses Rohr umgibt und deren innere und äußere Wände (10, 6) konisch sind, wobei die innere Wand (10) auf dem zentralen Rohr (5) aufliegt und die äußere Wand (6) über das Ende (16) des Rohrs (5) hervorragt und in einem sich erweiternden Bereich (8) endet.

5. Vorrichtung nach Anspruch 4, dadurch gekennzeichnet, daß die Leitung (7) für neutrales Gas in der Nähe des Endes (16) des zentralen Rohrs (5) Leitschaufeln (15) aufweist, die das neutrale Gas in Drehung versetzen.
